# EUROPÄISCHE PATENTSCHRIFT

(11) **EP 1 698 520 B1**
(45) Veröffentlichungstag und Bekanntmachung des Hinweises auf die Patenterteilung: **18.07.2007**
(21) Anmeldenummer: 06003870.0
(22) Anmeldetag: 25.02.2006
(51) Int. Cl.: B60R 19/12, B60R 21/34, B62D 25/08, B60K 11/08

(54) **Karosseriefrontstruktur mit Fussgängerschutzeinrichtung**
Frontbody structure with pedestrian protection device
Structure avant de carrosserie avec dispositif de protection de piétons

(30) Priorität: 03.03.2005 DE 102005009768
(43) Veröffentlichungstag der Anmeldung: 06.09.2006
(73) Patentinhaber: HBPO GmbH, 59557 Lippstadt (DE)
(72) Erfinder: Schlüter, Sascha, 26842 Ostrhauderfehn (DE); Drees, Marco, 59229 Ahlen (DE)
(74) Vertreter: Elbertzhagen, Otto

(56) Entgegenhaltungen:
- EP-A- 1 067 039
- EP-A- 1 138 557
- EP-A- 1 321 322
- EP-A- 1 352 810
- DE-A1- 10 154 113
- US-A- 4 566 407

## Beschreibung

Die Erfindung bezieht sich auf eine Karosseriefrontstruktur mit Fußgängerschutzeinrichtung für ein Kraftfahrzeug gemäß den Merkmalen des Oberbegriffs des Patentanspruchs 1.

Eine gattungsgemäß Karosseriefrontstruktur ist aus dem Dokument EP 1 138 557 A1 bekannt. Der Querträger für die Fußgängerschutzeinrichtung dient dort lediglich der Anbringung des Prallelementes für den Fußgängerschutz, welches aus einem stoßabsorbierenden Material besteht. Dieser Querträger, auch Fußgängerquerträger genannt, befindet sich unterhalb eines Stoßfängerquerträgers, letzterer dient primär dem Schutz des Fahrzeugs. Der Fußgängerquerträger mit seinem Prallelement sorgt für einen verbesserten Fußgängerschutz im Fall einer Frontkollision des Fahrzeugs mit einem Fußgänger. Hierbei erfüllt die Fußgängerschutzeinrichtung unter anderem den Zweck, ein Untertauchen des Fußgängers unter das Auto zu verhindern, indem eine Stützung des Unterschenkels des angefahrenen Fußgängers erfolgt und hierdurch dessen Oberkörper bei dem Aufprall auf das Fahrzeug in eine Drehbewegung versetzt wird, die zur Oberseite des Fahrzeugs hin gerichtet ist. Wenn dies erreicht wird, laufen Unfälle mit einem Frontaufprall eines Fußgängers auf die frontseitige Karosseriestruktur am Fahrzeug glimpflicher ab.

Da sich die Fußgängerschutzeinrichtung mit dem Fußgängerquerträger und dem Prallelement an der Frontseite des Fahrzeugs in bodennaher Anordnung befindet, wird sie schon bei einem leichten Frontunfall des Fahrzeugs beschädigt und muß ausgetauscht werden. Dies betrifft auch andere an der Frontseite des Fahrzeugs angeordnete Teile, wie vor allem das Luftleitteil, welches im Bereich des Stoßfängerquerträgers angebracht ist. An das Luftleitteil werden ebenfalls aus Gründen des Fußgängerschutzes besondere Anforderungen gestellt. Denn wegen der notwendigen Verformungsräume im Bereich der Motorhaube, die im Bereich der möglichen Hüft- und Kopfaufschlaggebiete vorgesehen werden müssen, steht sowohl für den Wärmetauscher als auch für die Kühlluftführung lediglich eine reduzierte Bauhöhe zur Verfügung. Umso wichtiger ist es, den Kühlluftstrom sicher zum Wärmetauscher hinzuleiten und hierbei eine Rückführung warmer Luft aus dem Motorraum in das kühlluftführende Luftleitteil zu verhindern.

Der Erfindung liegt die Aufgabe zugrunde, eine Karosseriefrontstruktur der eingangs genannten Art zu schaffen, die eine kostengünstige Herstellung und reparaturfreundliche Ausführung zum einen der unteren Fußgängerschutzeinrichtung und zum anderen des Luftleitteils mit der Kühlluftführung miteinander vereint.

Diese Aufgabe wird bei einer Karosseriefrontstruktur der genannten Art nach der Erfindung durch die Merkmale des Patentanspruchs 1 gelöst.

Für die Erfindung ist wesentlich, daß der Querträger der Fußgängerschutzeinrichtung und das Luftleitteil in Gestalt eines Luftleitkastens eine bauliche Einheit darstellen, die sowohl den Sicherheitsanforderungen, die an die Fußgängerschutzeinrichtung zu stellen sind, als auch der zuverlässigen Kühlluftführung bis zum Montageraum für den Wärmetauscher hin gerecht wird.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert.

### In der Zeichnung zeigen:

- Fig. 1: eine Karosseriefrontstruktur für einen Personen- oder Kleinlastkraftwagen in gesprengter Darstellung und
- Fig. 2: einen Vertikalschnitt durch den vorderen Bereich der Karosseriefrontstruktur gemäß Fig. 1.

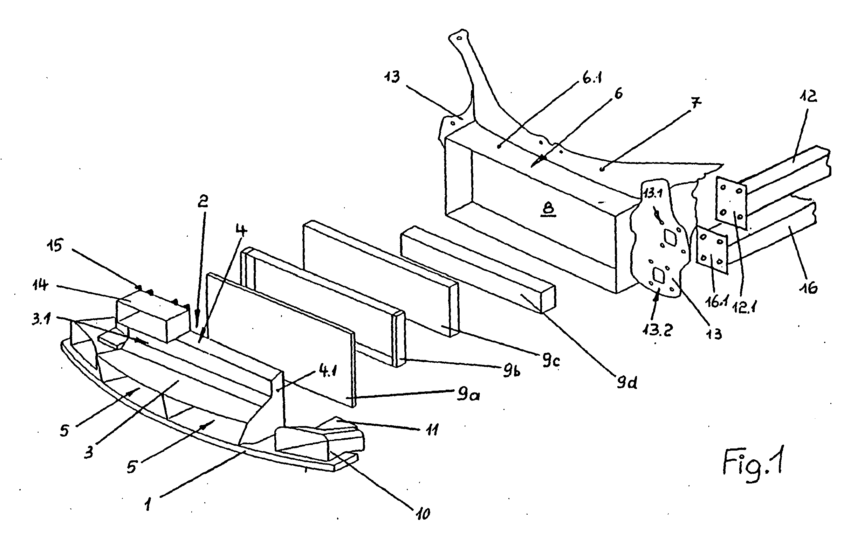

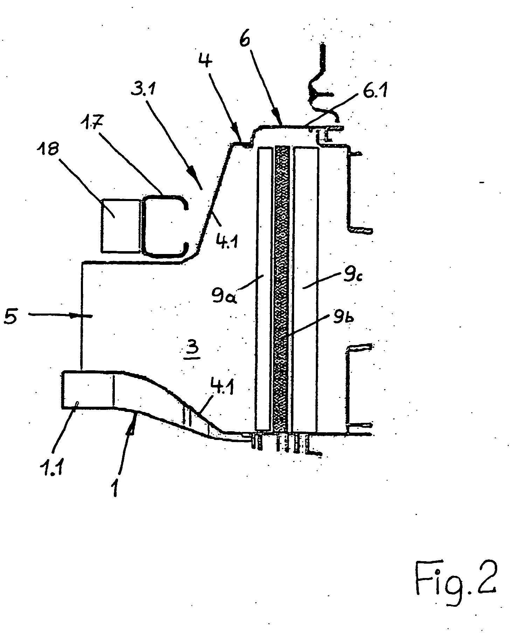

Im einzelnen erkennt man in Fig. 1 einen Querträger 1, der als Fußgängerquerträger bezeichnet wird, weil er zumindest ein in Fig. 2 wiedergegebenes Prallelement 1.1 für den Fußgängerschutz trägt, welches an der Frontseite des Fahrzeugs mit geringem Bodenabstand unterhalb des Stoßfängerbereichs angeordnet wird. Der Querträger 1 trägt ferner ein Luftleitteil 2, welches an der Oberseite des Querträgers 1 anschließt und daran nach oben vorsteht. Das Luftleitteil 2 ist als Luftleitkasten 3 ausgeführt, in den ein Lufteinlaßkanal 5 an der Vorderseite mündet. An der Rückseite ist der Luftleitkasten 3 offen, und seine Wandungen setzen sich in einem rückwärtig vorstehenden Rahmen 4 fort, dessen Wandungen 4.1 die rückwärtige Öffnung des Luftleitkastens 3 umschließen. Zu beiden Seiten des Luftleitkastens 3 sind des weiteren Luftführungen 10 am Querträger 1 vorgesehen, durch welche Luft zu den Bremsen des Fahrzeugs geführt werden kann.

In bevorzugter Ausführung sind der Querträger 1 und der Luftleitkasten 3 einstückig miteinander ausgeführt. Der Querträger 1 besteht hierbei aus einem Profilstrang aus Metall oder einem Metall-Kunststoffverbund. Für den Luftleitkasten 3 kommt der Einsatz von Kunststoff oder ebenfalls von einem Metall-Kunststoffverbund in Betracht. Die verwendeten Kunststoffe sind in geeigneter Weise mit Verstärkungsmaterialien versehen, und es werden am Querträger 1 und/oder am Luftleitkasten 3 Befestigungselemente für die Sicherung am Fahrzeug angesetzt oder angeformt. Zweckmäßig wird die gesamte, aus dem Querträger 1 und dem Luftleitkasten 3 bestehende Einheit im Spritzgießprozeß hergestellt, so werden auch die kraftübertragenden Befestigungselemente mit an die bauliche Einheit angegossen. Man erhält auf diesem Wege eine montagefreundliche bauliche Einheit, die nicht nur die Erstmontage sondern auch im Beschädigungsfalle das Auswechseln erleichtert.

In der Einbaulage schließt der Luftleitkasten 3 mit den Kanten der Wandungen 4.1 seines Rahmens 4 an eine Zarge 6 an, deren Kanten an den Wandungen 6.1 im Stoßbereich zum Rahmen 4 hin den gleichen Verlauf wie die Kanten an dessen Wandungen 4.1 haben, um einen luftdichten Anschluß des Luftleitkastens 3 an der Zarge 6 zu erzielen. Die Zarge 6 umschließt einen Montageraum 8, der in Fahrtrichtung gesehen nach hinten hin, also zum Motorraum des Fahrzeugs offen ist. In dem Montageraum 8 ist zumindest ein Wärmetauscher 9 in fahrzeugfester Fixierung angeordnet, es kann sich auch um zwei oder mehrere Wärmetauscher 9a - 9d handeln, je nachdem ob der Wärmetauscher für die Motorkühlung in zwei Einheiten untergliedert ist oder Wärmetauscher für den Ölkreislauf des Motors für eine Klimaanlage oder dergleichen zusätzlich erforderlich sind.

In vorteilhafter Ausführung der gesamten Karosseriefrontstruktur ist die den Montageraum 8 umgebende Zarge 6 Teil eines Montageträgers 7 eines Fahrzeug-Frontends.

Der Montageträger 7 trägt weitere Funktionselemente, wie Scheinwerfer, Signaleinrichtungen oder dergleichen, die in der Zeichnung nicht wiedergegeben sind.

Der Fußgängerquerträger 1 wird zusammen mit dem Montageträger 7 an den üblichen Fahrzeuglängsträgern 12, 16 befestigt. Die Längsträger weisen an ihren vorderen Stirnseiten Flanschplatten 12.1, 16.1 auf, an die der Montageträger 7 mittels einer daran festen Gegenplatte 13 angeschraubt wird, die hierzu entsprechende Lochbilder 13.1, 13.2 aufweist. Am Fußgängerquerträger finden sich seitlich neben dem Luftleitkasten 3 Befestigungselemente 11, die in Fahrzeuglängsrichtung gesehen nach hinten am Querträger 1 vorstehen. So können in zusammengefügter Anordnung die Befestigungselemente 11 des Fußgängerquerträgers 1 die Zarge 6 am Montageträger 7 seitlich umgreifen, um unter Zwischenfügung der Gegenplatten 13 am Montageträger 7 mit den Flanschplatten 12.1, 16.1 der Fahrzeuglängsträger 12, 16 verschraubt zu werden. Die Befestigungselemente 11 am Fußgängerquerträger 1 können sogleich als Crashboxen ausgeführt werden.

Verfügt entsprechend dem dargestellten Ausführungsbeispiel das Fahrzeug über zwei Längsträger 12 und 16 sowohl an seiner rechten als auch an seiner linken Seite im unteren Frontbereich, dann können zwei Lastpfade für die Aufnahme von Verformungsenergie im Crashfalle vorgesehen werden. Der Fußgängerquerträger 1 ist bei dieser Ausführung mittels seiner als Crashboxen ausgebildeten Befestigungselemente 11 mit den jeweils unteren Längsträgern 16 unter Nutzung des zweiten Lastpfades verbunden. Es können auch separate, vor die stirnseitigen Flanschplatten 16.1 der unteren Längsträger 16 vorgesetzte Crashboxen vorgesehen werden, um daran den Fußgängerquerträger 1 anzusetzen.

Die oberen Fahrzeug-Längsträger 12 mit ihren Flanschplatten 12.1 dienen zur Aufnahme des Stoßfängerquerträgers 17, der in Fig. 1 nicht dargestellt, jedoch in Fig. 2 zu erkennen ist. Der Stoßfängerquerträger 17 hat nach oben hin einen deutlichen Abstand von dem Fußgängerquerträger 1, denn zwischen dem Stoßfängerquerträger 17 und dem Fußgängerquerträger 1 befindet sich der Lufteinlaßkanal 5 des Luftleitkastens 3. Um Platz für den Stoßfängerquerträger 17 zu schaffen, weist die obere Wandung 4.1 des Luftleitkastens 3 bzw. seines Rahmens 4 eine in Fahrzeugquerrichtung verlaufende Einbuchtung 3.1 auf, in deren Bereich sich der Luftleitkasten 3 sich in Fahrzeuglängsrichtung hinter dem Stoßfängerquerträger 17 gesehen nach oben hin erweitert. Da auch der Stoßfängerquerträger 17 dem Fußgängerschutz angepaßt sein muß, ist er an seiner Vorderseite mit einem Aufpralldämpfungselement 18 versehen.

Weiter ist aus Fig. 2 in schematischer Darstellung ersichtlich, daß der Fußgängerquerträger 1 an seiner Frontseite mit dem Prallelement 1.1 versehen ist, welches an die Underleg-Stützfunktion angepaßt und einem möglichst schonungsvollen Aufprall entsprechend ausgebildet ist.

Der Fußgängerquerträger 1 und der Montageträger 7 können in vorteilhafter Weise als vormontiertes Modul ausgeführt werden. Alle weiteren für dieses Modul vorgesehenen Komponenten können ebenfalls vormontiert werden, was eine kostengünstige Montage des gesamten Frontends ermöglicht.

Auch am Luftleitkasten 3 am Fußgängerquerträger 1 können weitere, für den Fahrzeugbetrieb notwendige Bauteile angebracht sein, wie Fig. 1 weiter zeigt. So kann hier zumindest ein Luftleitkanal 14 für das Zuführen von Verbrennungsluft zum Motorraum vorgesehen sein, der zugleich als Verformungselement für den Fußgängerschutz ausgeführt ist. Deshalb ist der Luftleitkanal 14 lediglich an seiner rückwärtigen, zum Motorraum hin liegenden Seite mittels Rippen 15 versteift.

## Patentansprüche

1. Karosseriefrontstruktur mit Fußgängerschutzeinrichtung für ein Kraftfahrzeug, insbesondere einen Personen- oder Klein-lastkraftwagen, mit einem zumindest ein Prallelement (1.1) aus einem stoßabsorbierenden Material haltenden, unterhalb des Stoßfängerbereichs angeordneten Querträger (1), hinter dem in Fahrzeuglängsrichtung zumindest ein Wärmetauscher (9) für die Motorkühlung angeordnet ist, vor dem in der Fahrzeuglängsrichtung sich ein Luftleitteil (2) befindet, wobei
das Luftleitteil (2) am Querträger (1) der Fußgängerschutzeinrichtung angeordnet ist, **dadurch gekennzeichnet, daß** das Luftleitteil (2) als Luftleitkasten (3) ausgebildet ist, an dessen Vorderseite zumindest ein Lufteinlaßschacht (5) anschließt und der an seiner offenen Rückseite einen umlaufenden Rahmen (4) aufweist, mittels dem er an eine einen Montageraum (8) für den Wärmetauscher (9) umschließende Zarge (6) luftdicht angeschlossen ist.

2. Karosseriefrontstruktur nach Anspruch 1,
**dadurch gekennzeichnet,**
**daß** der Querträger (1) der Fußgängerschutzeinrichtung und der Luftleitkasten (3) einstückig sind.

3. Karosseriefrontstruktur nach Anspruch 2,
**dadurch gekennzeichnet,**
**daß** der Querträger (1) der Fußgängerschutzeinrichtung aus einem Profilstrang aus Metall oder einem Metall-Kunststoff-Verbund besteht und daran der Luftleitkasten (3) mit dem Lufteinlaßschacht (5) als Kunststoffspritzgußteil im Spritzgießverfahren angegossen ist.

4. Karosseriefrontstruktur nach einem der Ansprüche 1 - 3,
**dadurch gekennzeichnet,**
**daß** am Querträger (1) der Fußgängerschutzeinrichtung beidseitig neben dem Luftleitkasten (3) Befestigungselemente (11) zur Befestigung an Fahrzeuglängsträgern (12) in Fahrzeuglängsrichtung nach hinten hin vorstehend angeordnet sind.

5. Karosseriefrontstruktur nach Anspruch 4,
**dadurch gekennzeichnet,**
**daß** die Befestigungselemente (11) als Crashboxen ausgebildet sind.

6. Karosseriefrontstruktur nach einem der Ansprüche 1 - 5,
**dadurch gekennzeichnet,**
**daß** die den Montageraum (8) für den zumindest einen Wärmetauscher (9) umschließende Zarge (6) Teil eines Montageträgers (7) eines Fahrzeugfrontends ist.

## Claims

1. Front body structure with pedestrian protection device for a motor vehicle, more particularly a passenger or minivan vehicle, with a transverse support (1) mounted underneath the bumper area and holding at least one impact element (1.1) of a shock-absorbing material, wherein at least one heat exchanger (9) for the engine cooling system is mounted behind the transverse support in the longitudinal direction of the vehicle and in front of this in the longitudinal direction of the vehicle there is an air guide part (2) wherein the air guide part (2) is mounted on the transverse support (1) of the passenger protection device,
**characterised in that**
the air guide part (2) is formed as an air guide box (3) whose front side is adjoined by at least an air inlet shaft (5) and which has on its open rear side a circumferential frame (4) by means of which it is attached airtight to a frame rail (6) which surrounds an assembly space (8) for the heat exchanger (9).

2. Front body structure according to claim 1,
**characterised in that**
the transverse support (1) of the pedestrian protection device and the air guide box (3) are formed in one piece.

3. Front body structure according to claim 2,
**characterised in that**
the transverse support (1) of the pedestrian protection device consists of a metal profile or a metal/plastics compound and the air guide box (3) with the air inlet shaft (5) is cast on same as an injection moulded cast part in the injection moulding process.

4. Front body structure according to one of claims 1 to 3,
**characterised in that**
fixing elements (11) for fixing on vehicle longitudinal supports (12) are arranged on the transverse support (1) of the pedestrian protection device either side next to the air guide box (3) and protrude backwards in the longitudinal direction of the vehicle.

5. Front body structure according to claim 4,
**characterised in that**
the fixing elements (11) are formed as crash boxes.

6. Front body structure according to one of claims 1 to 5,
**characterised in that**
the frame rail (6) surrounding the assembly space (8) for the at least one heat exchanger (9) is part of an assembly support (7) of a vehicle front end.

## Revendications

1. Structure frontale de carrosserie pour un véhicule automobile, notamment pour une voiture particulière ou un petit véhicule utilitaire, avec dispositif de protection de piétons avec une traverse (1) qui, maintenant au moins un élément d'impact (1.1) en matériau absorbant les chocs, est disposée au-dessous de la région du pare-chocs, et derrière laquelle, dans la direction longitudinale du véhicule automobile, est disposé, pour le refroidissement du moteur, au moins un échangeur thermique (9), en amont duquel se trouve un déflecteur d'air (2), ledit déflecteur d'air (2) étant agencé sur la traverse (1) du dispositif de protection de piétons,
**caractérisée en ce que**
le déflecteur d'air (2) est conçu sous la forme d'une boîte de déflection d'air (3), sur la face avant de laquelle est raccordé au moins un caisson d'admission d'air (5), et qui présente sur sa face arrière, ouverte, un cadre continu (4) au moyen duquel elle est raccordée à un châssis (6) qui entoure une chambre de montage (8) pour l'échangeur thermique (9).

2. Structure frontale de carrosserie selon la revendication 1,
**caractérisée en ce que**
la traverse (1) du dispositif de protection de piétons et la boîtes de déflection d'air (3) sont formées d'une seule pièce.

3. Structure frontale de carrosserie selon la revendication 2,
**caractérisée en ce que**
la traverse (1) du dispositif de protection de piétons consiste en un profilé en métal ou en un composite en métal et matière synthétique, et que la boîte de déflection d'air (3), avec le caisson d'admission (5), est moulée sur celle-ci selon le procédé de moulage par injection, en tant que pièce en matière synthétique.

4. Structure frontale de carrosserie selon l'une des revendications 1 à 3,
**caractérisée en ce que**,
sur la traverse (1) du dispositif de protection de piétons, des deux côtés, à côté de la boîte de déflection (3), sont disposés, en saillie vers l'arrière, des éléments de fixation (11) pour la fixation aux longerons (12) du véhicule automobile, dans la direction longitudinale dudit véhicule automobile.

5. Structure frontale de carrosserie selon la revendication 4,
**caractérisée en ce que**
les éléments de fixation (11) sont conçus en tant qu'absorbeurs de chocs déformables.

6. Structure frontale de carrosserie selon l'une des revendications 1 à 5,
**caractérisée en ce que**
le châssis (6), qui entoure la chambre de montage (8) pour au moins un échangeur thermique (9), fait partie d'un support de montage (7) d'une extrémité frontale du véhicule automobile.
